# EUROPÄISCHE PATENTANMELDUNG

(11) **EP 2 574 576 A1**
(43) Veröffentlichungstag der Anmeldung: **03.04.2013**
(21) Anmeldenummer: 12177978.9
(22) Anmeldetag: 26.07.2012
(51) Int. Cl.: B65G 47/91, B25J 15/06

(54) **Sauggreifer und Verfahren zum Reinigen eines Sauggreifers**

(30) Priorität: 27.09.2011 DE 102011083498
(71) Anmelder: Reifenhäuser, Uwe, 57632 Flammersfeld (DE)
(72) Erfinder: Reifenhäuser, Uwe, 57632 Flammersfeld (DE)
(74) Vertreter: Bauer, Dirk

(57) **Zusammenfassung**

Offenbart ist ein Sauggreifer (1) für Lebensmittel mit einem Greifelement (4), einem mit dem Greifelement (4) verbundenen Vakuumzylinder (3) und einem Kolben, sowie mit einem an dem Vakuumzylinder (3) angebrachten Antrieb (2) für den Kolben zum Verschieben des Kolbens in dem Vakuumzylinder (3), wobei im Betrieb des Sauggreifers (1) ein Verschieben des Kolbens in einer Axialrichtung des Vakuumzylinders (3) in dem Vakuumzylinder (3) und in dem Greifelement (4) einen Unterdruck zum Greifen des Lebensmittels aufbaut. Offenbart ist weiterhin ein Verfahren zum Reinigen eines solchen Sauggreifers (1).

Um einen solchen Sauggreifer möglichst einfach zu reinigen wird erfindungsgemäß vorgeschlagen, einen Schnellverschluss (5) (Bajonettverschluss) vorzusehen, der den Vakuumzylinder (3) mit dem Antrieb (2) verbindet, wobei nach einem Lösen des Schnellverschlusses (5) der Vakuumzylinder (3) von dem Antrieb (2) manuell, also ohne Werkzeuge mit den Händen abnehmbar ist.

## Beschreibung

Die Erfindung betrifft einen Sauggreifer sowie ein für Lebensmittel mit einem Greifelement, einem mit dem Greifelement verbundenen Vakuumzylinder und einem Kolben, sowie mit einem an dem Vakuumzylinder angebrachten Antrieb für den Kolben zum Verschieben des Kolbens in dem Vakuumzylinder, wobei im Betrieb des Sauggreifers ein Verschieben des Kolbens in einer Axialrichtung des Vakuumzylinders in dem Vakuumzylinder und in dem Greifelement einen Unterdruck zum Greifen des Lebensmittels aufbaut. Die Erfindung betrifft weiter ein Verfahren zum Reinigen eines solchen Sauggreifers.

Ein solcher Sauggreifer ist aus DE 10 2008 011 980 B3 offenbart: Der bekannte Sauggreifer weist eine Kolben-Zylindereinheit als Antrieb zum Verschieben des Kolbens auf. Durch die von der Kolben-Zylindereinheit angetriebene Verschiebung des Kolbens wird in dem Vakuumzylinder und in dem angeschlossenen Greifelement ein Unterdruck aufgebaut. Der Kolben in dem Vakuumzylinder begrenzt einen mit dem Unterdruck beaufschlagten Bereich in dem Greifelement und vermeidet so wirksam die Kontamination des Antriebs mit an dem Greifelement anhaftenden Resten des Lebensmittels. Einen weiteren Sauggreifer der einleitend genannten Art offenbart EP 1 4774 39 A.

Gleichwohl kann im Betrieb des bekannten Sauggreifers dessen Vakuumzylinder mit solchen Lebensmittelresten kontaminiert werden. Der Vakuumzylinder und der Kolben müssen daher regelmäßig gereinigt werden, um Kontaminationsquellen durch die Ansiedlung von Mikroorganismen, insbesondere von Bakterien und Pilzen zu vermeiden.

### Aufgabe

Der Erfindung liegt die Aufgabe zugrunde, einen solchen Sauggreifer möglichst einfach zu reinigen.

### Lösung

Ausgehend von dem bekannten Sauggreifer wird nach der Erfindung vorgeschlagen, einen Schnellverschluss vorzusehen, der den Vakuumzylinder mit dem Antrieb verbindet, wobei nach einem Lösen des Schnellverschlusses der Vakuumzylinder von dem Antrieb manuell, also ohne Werkzeuge mit den Händen abnehmbar ist. Der vom Antrieb abgenommene Vakuumzylinder ist leichter zu handhaben und zu reinigen. Der Kolben kann zur Reinigung des Innenraums des Vakuumzylinders entweder manuell aus dem Vakuumzylinder entnommen werden oder - wenn er mit dem Antrieb fest verbunden ist - an diesem verbleiben.

Als Schnellverschluss kommen mechanische Verschlusssysteme wie beispielsweise einzeln oder paarweise seitlich am Sauggreifer - am Antrieb oder am Vakuumzylinder - angebrachte Klammern oder magnetische Verbindungselemente in Verbindung mit mechanischen Hebelkonstruktionen zum Lösen der Verbindung in Betracht.

Bevorzugt ist der Schnellverschluss eines erfindungsgemäßen Sauggreifers ein Bajonettverschluss. Alternativ können andere gewindeartige Elemente - beispielsweise ein Befestigungsgewinde - an Antrieb und Vakuumzylinder einen Schnellverschluss bilden. Derartige gewindeartige Elemente erfordern zwar eine höhere Fertigungsgenauigkeit, vermeiden aber weitere bewegte Teile für den Schnellverschluss und erleichtern so die Reinigung des erfindungsgemäßen Sauggreifers.

Vorzugsweise ist an einem erfindungsgemäßen Sauggreifer das Greifelement fest an dem Vakuumzylinder angebracht und weist einen Schneidring auf, der beim Greifen des Lebensmittels in dessen Oberfläche einschneidet und so das Greifelement abdichtet. Der aus DE 10 2008 011 980 B3 bekannten Sauggreifer weist ein solches Greifelement auf. Ein solcher erfindungsgemäßer Sauggreifer eignet sich insbesondere für das Fixieren oder das exakte Führen eines Gutsstrangs beim Aufschneiden.

Weiterhin bevorzugt weist ein solcher erfindungsgemäßer Sauggreifer einen in dem Vakuumzylinder in der Axialrichtung beweglich gelagerten Auswerfer auf, der zum Auswerfen des Lebensmittels durch das Greifelement hindurch Druck auf die Oberfläche des Lebensmittels ausübt. Ein solcher Auswerfer vereinfacht das automatische Lösen des Sauggreifers von dem Lebensmittel.

Außerdem weist ein erfindungsgemäßer Sauggreifer mit an dem Vakuumzylinder angebrachtem Greifelement vorteilhafter Weise einen Taster auf, der aus dem Antrieb durch das Greifelement hindurch geführt ist und zu Beginn eines Greifvorgangs den Antrieb in Betrieb setzt, wenn er mit der Oberfläche des Lebensmittels in Kontakt kommt. Ein solcher Taster vermeidet beim Greifen insbesondere von unregelmäßig geformten Lebensmitteln mit einem erfindungsgemäßen Sauggreifer die vorzeitige Verschiebung des Kolben in dem Vakuumzylinder.

Ein erfindungsgemäßer Sauggreifer mit an dem Vakuumzylinder angebrachtem Greifelement weist weiter bevorzugt einen weiteren Schnellverschluss auf, der das Greifelement mit dem Vakuumzylinder verbindet, wobei nach einem Lösen des weiteren Schnellverschlusses das Greifelement von dem Vakuumzylinder manuell abnehmbar ist. Die durch einen solchen weiteren Schnellverschluss erzielten Vorteile und die für einen solchen weiteren Schnellverschluss möglichen Ausführungen entsprechen den für den Schnellverschluss zwischen Vakuumzylinder und Antrieb dargestellten Vorteilen und Ausführungen.

Anstelle eines an dem Vakuumzylinder angebrachten Greifelements kann ein erfindungsgemäßer Sauggreifer einen Schlauch aufweisen, durch den der Vakuumzylinder mit dem Greifelement verbunden ist, wobei das Greifelement ein flexibles Kontaktelement aufweist, das sich beim Greifen des Lebensmittels an dessen Oberflächenkontur anpasst und so das Greifelement abdichtet. Ein solcher erfindungsgemäßer Sauggreifer eignet sich insbesondere für das Greifen, Umlagern und Ablegen einzelner Stücke oder Scheiben eines portionierten Lebensmittels für die Verpackung.

Ausgehend von der Reinigung des bekannten Sauggreifers wird nach der Erfindung vorgeschlagen, dass der Vakuumzylinder durch Lösen eines Schnellverschlusses von dem Antrieb gelöst und manuell, also ohne Werkzeuge mit den Händen abgenommen wird, und dass der Vakuumzylinder von dem Antrieb getrennt gereinigt und nach dem Reinigen auf den Antrieb wieder aufgesetzt und der Schnellverschluss geschlossen wird. Das erfindungsgemäße Verfahren erfordert einen erfindungsgemäßen Sauggreifer und zeichnet sich durch die für diesen beschriebenen Vorteile aus.

Vorzugsweise wird im Rahmen eines erfindungsgemäßen Verfahrens der Vakuumzylinder nach dem Abnehmen von dem Antrieb auf einer Transporteinrichtung in der Axialrichtung im Wesentlichen senkrecht abgestellt. Das Abstellen auf einer Transporteinrichtung erleichtert den gegebenen Falls automatisierten Transport auch mehrerer Vakuumzylinder beispielsweise zu einer Reinigungsvorrichtung, durch eine solche Reinigungsvorrichtung hindurch und zurück zu den Antrieben. Das senkrechte Abstellen mit dem Greifelement nach unten vermeidet ein Verteilen von eventuell an dem Greifelement anhaftenden Lebensmittelresten in Richtung der Längsachse in oder an dem Vakuumzylinder.

Vorteilhafter Weise werden im Rahmen eines erfindungsgemäßen Verfahrens vor dem Reinigen von dem Vakuumzylinder ein Greifelement mit einem Schneidring, ein solches Greifelement und ein Auswerfer oder ein Anschlusselement mit einem Schlauch, durch den der Vakuumzylinder mit dem Greifelement verbunden ist, manuell abgenommen. Das Zerlegen des Vakuumzylinders in seine weiteren Bestandteile erleichtert die Reinigung insbesondere der Kontaktstellen zwischen diesen Bestandteilen.

In einer bevorzugten Ausführung eines erfindungsgemäßen Verfahrens werden mehrere Vakuumzylinder gesammelt und in einem Reinigungsvorgang gemeinsam gereinigt. Durch die Zusammenführung und gemeinsame Reinigung wird die Reinigung insgesamt wirtschaftlicher.

### Ausführungsbeispiel

Die Erfindung wird nachfolgend anhand von Ausführungsbeispielen erläutert. Es zeigen
- Fig. 1a: einen erfindungsgemäßen Sauggreifer und
- Fig. 1b: den erfindungsgemäßen Sauggreifer in einem Längsschnitt,

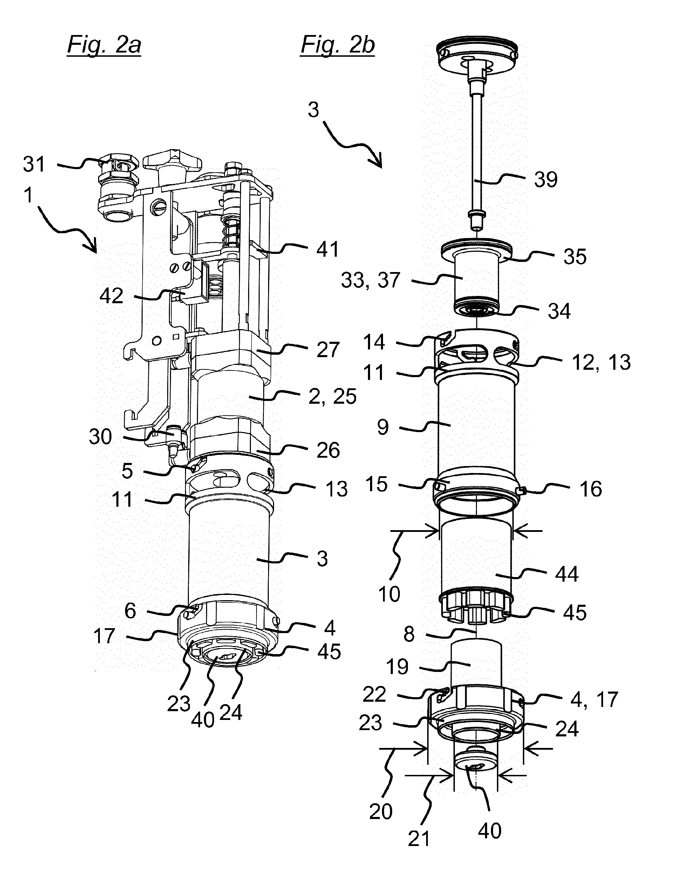

- Fig. 2a: den erfindungsgemäßen Sauggreifer in einer perspektivischen Ansicht und
- Fig. 2b: eine partielle perspektivische Explosionsansicht des erfindungsgemäßen Sauggreifers,

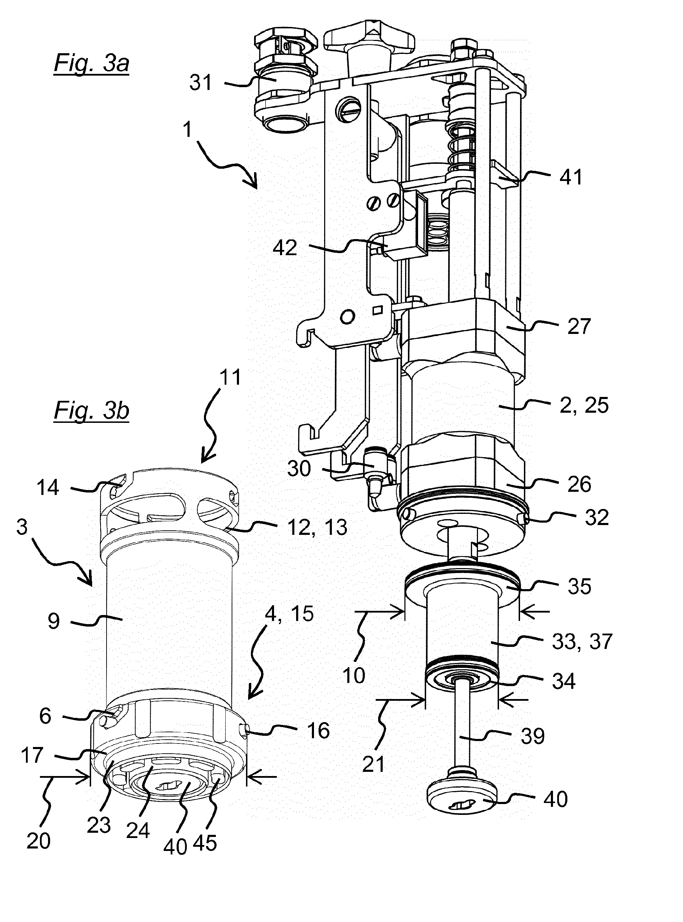

- Fig. 3a: den erfindungsgemäßen Sauggreifer mit demontiertem Vakuumzylinder und
- Fig. 3b: den demontierten Vakuumzylinder des erfindungsgemäßen Sauggreifers sowie

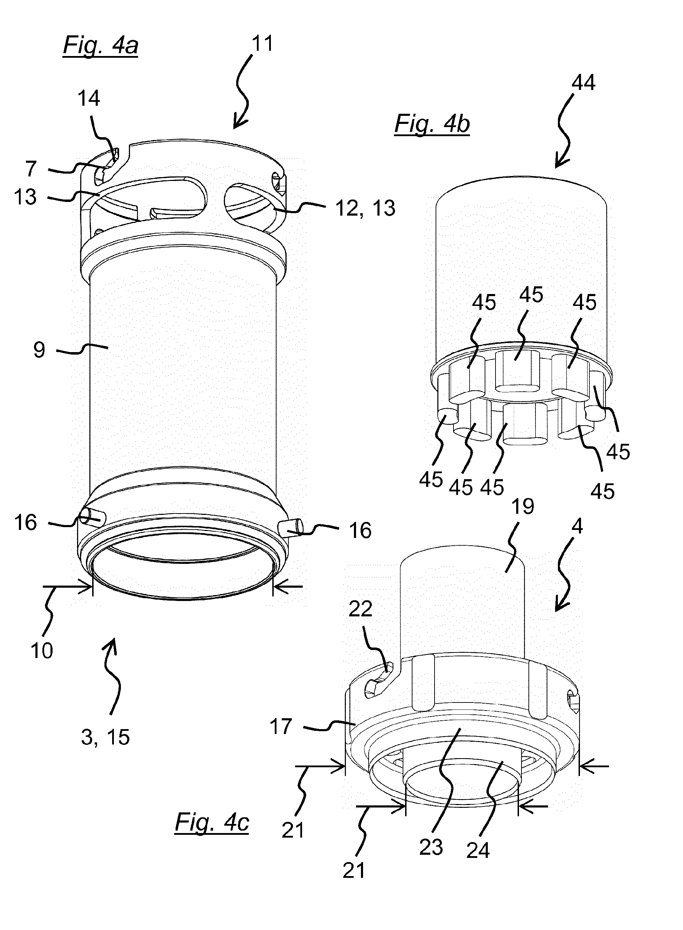

- Fig. 4a: den Vakuumzylinders des erfindungsgemäßen Sauggreifers mit demontiertem Greifelement und demontiertem Auswerfer,
- Fig. 4b: den Auswerfer des erfindungsgemäßen Sauggreifers und
- Fig. 4c: das Greifelement des erfindungsgemäßen Sauggreifers.

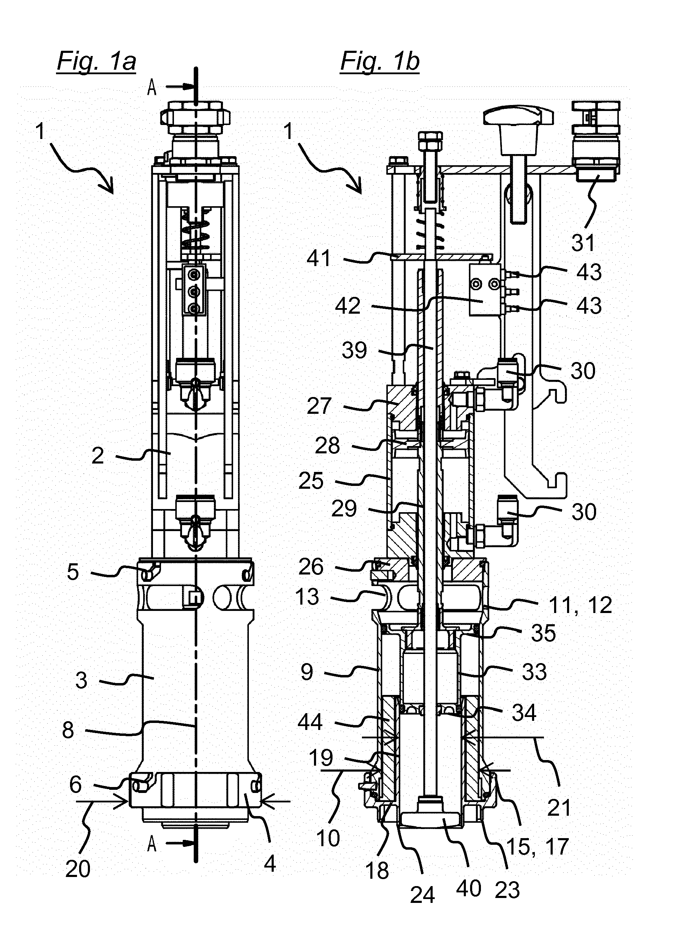

Das in Figur 1 gezeigte erfindungsgemäße Sauggreifer 1 weist einen Antrieb 2, einen Vakuumzylinder 3 und ein Greifelement 4 auf. Der Vakuumzylinder 3 ist mit einem Schnellverschluss 5 an dem Antrieb 2 angebracht und das Greifelement 4 ist mit einem weiteren Schnellverschluss 6 mit dem Vakuumzylinder 3 verbunden.

Beide Schnellverschlüsse sind als "Bajonettverschlüsse" ausgeführt: Zum Öffnen der Schnellverschlüsse kann der Vakuumzylinder 3 gegenüber dem Antrieb 2, respektive das Greifelement 4 gegenüber dem Vakuumzylinder 3 nach Überwinden jeweils einer Raste 7 um etwa 15 ° gegen den Uhrzeigersinn verschwenkt werden. Anschließend kann der Vakuumzylinder 3 von dem Antrieb 2, respektive das Greifelement 4 von dem Vakuumzylinder 3 entlang der Längsachse 8 des erfindungsgemäßen Sauggreifers 1 entnommen werden.

Der Vakuumzylinder 3 weist ein zylinderförmiges Gehäuse 9 mit einem inneren Durchmesser 10 von 63 mm und am leicht aufgeweiteten oberen Ende 11 des Gehäuses 9 am Umfang 12 jeweils um 120 ° gegeneinander versetzt drei den Umfang 12 nahezu vollständig öffnende Durchbrüche 13 sowie drei hakenförmige Schlitze 14 auf. Um unteren Ende 15 des Gehäuses 9 sind über den Umfang 12 des Vakuumzylinders 3 jeweils um 120 ° gegeneinander versetzt drei radial vorstehende Stifte 16 angebracht.

Das Greifelement 4 weist einen äußeren Kranz 17 und einen mit dem Kranz 17 durch radiale Stege 18 (nur in Fig. 1b dargestellt) verbundenen Zylinder 19 auf. Der Kranz 17 weist einen äußeren Durchmesser 20 von 85 mm und der innere Zylinder 19 einen inneren Durchmesser 21 von 48 mm auf. Am Umfang des Kranzes 17 sind jeweils um 120 ° gegeneinander versetzt drei hakenförmige Schlitze 22 angebracht, die mit den Stiften 16 an dem Vakuumzylinder 3 als "Bajonettverschluss" zusammenwirken. An dem Kranz 17 ist ein äußerer Schneidring 23 und an dem Zylinder 19 ein gegenüber dem äußeren leicht vorstehender innerer Schneidring 24 angebracht.

Der Antrieb 2 weist ein zylindrisches Gehäuse 25 mit zwei Abschlusskappen 26, 27, sowie einen in dem Gehäuse 25 entlang der Längsachse 8 geführten Kolben 28 auf. Der Kolben 28 ist mit einer durch die untere Abschlusskappe 26 geführten Hohlachse 29 verbunden. Der Kolben 28 ist über zwei an den Abschlusskappen 26, 27 angebrachte Anschlusszylinder 30, die über nicht dargestellte Pneumatikschläuche durch eine Schlauchdurchfiihrung 31 zu einer gleichfalls nicht dargestellten Maschinenschnittstelle führen, mit Druckluft beaufschlagbar. An der unteren Abschlusskappe 26 sind über den Umfang des Gehäuses 25 jeweils um 120 ° gegeneinander versetzt drei radial vorstehende Stifte 32 angebracht, die mit den Schlitzen 14 an dem Vakuumzylinder 3 als "Bajonettverschluss" zusammenwirken.

Die aus dem Antrieb 2 herausgeführte Hohlachse 29 endet in einem weiteren Kolben 33, der als Doppelkolben mit zwei konzentrischen, stufenförmig gegeneinander versetzten Stirnflächen 34, 35 versehen ist. Im montierten Zustand umschließt die innere Stirnfläche 34 mit dem Zylinder 19 des Greifelements 4 einen inneren Saugraum 36, und die äußere Stirnfläche 35 mit einer Mantelfläche 37 des Kolben 33 und dem Vakuumzylinder 3 einen äußeren Saugraum 38 des erfindungsgemäßen Sauggreifers 1.

Durch den Kolben 33, die Hohlachse 29 und die obere Abschlusskappe 27 des Antriebs 2 ist ein Stößel 39 geführt, der im montierten Zustand in dem Greifelement 4 in einem Taster 40 endet. Der Taster 40 schließt dort im Wesentlichen mit dem inneren Schneidring 24 ab und wird von diesem geführt. Der Stößel 39 endet an einer federbelasteten Schaltzunge 41, die bei Betätigung über ein Ventil 42 die Druckbelüftung des Antriebs 2 zum Einfahren des Kolben 33 auslöst. Das Ventil 42 weist drei Anschlusszylinder 43 auf, die wiederum über nicht dargestellte Pneumatikschläuche durch die Schlauchdurchführung 31 zu der Maschinenschnittstelle führen.

Im Zwischenraum zwischen Vakuumzylinder 3, Kolben 33 und Zylinder 19 des Greifelements 4 ist im montierten Zustand ein Auswerfer 44 lose eingelegt. Der Auswerfer 44 füllt bei vollständig aus dem Antrieb 2 ausgefahrenem Hohlzylinder diesen Zwischenraum im Wesentlichen vollständig aus. An dem Auswerfer 44 sind acht Zapfen 45 angebracht, die zwischen den Stegen 18 durchdringen und in diesem Zustand mit dem äußeren Schneidring 23 im Wesentlichen bündig abschließen.

Zum Reinigen des erfindungsgemäßen Sauggreifers 1 wird der Vakuumzylinder 3 zunächst manuell, also mit den Händen gegriffen und in der Richtung der Längsachse 8 leicht gegen den Antrieb 2 gedrückt, um die Stifte 32 aus den Rasten 7 zu lösen, dann wird der Vakuumzylinder 3 gegenüber dem Antrieb 2 gegen den Uhrzeigersinn um die Längsachse 8 verschwenkt, um den Schnellverschluss 5 zu lösen.

Mit dem Vakuumzylinder 3 werden dann das Greifelement 4 und der Auswerfer 44 in Richtung der Längsachse 8 von dem Antrieb 2 abgezogen und auf einer Transportpalette im Wesentlichen senkrecht abgestellt, mit weiteren Vakuumzylindern derselben Schneidmaschine sowie weiteren Vakuumzylindern anderer Schneidmaschinen gesammelt und zu einer Reinigungsstation gebracht. Die Transportpalette, die weiteren Vakuumzylinder, die Schneidmaschinen und die Reinigungsstation sind in den Zeichnungsfiguren nicht dargestellt.

An der Reinigungsstation wird der Vakuumzylinder 3 wiederum manuell in der Richtung der Längsachse 8 leicht gegen das Greifelement 4 gedrückt und gegenüber dem Greifelement 4 gegen den Uhrzeigersinn um die Längsachse 8 verschwenkt, um den weiteren Schnellverschluss 6 zu lösen. Anschließend werden nacheinander der Vakuumzylinder 3 und der Auswerfer 44 in Richtung der Längsachse 8 von dem Greifelement 4 abgezogen. Nun werden Vakuumzylinder 3, Greifelement 4 und Auswerfer 44 in einer wiederum nicht dargestellten Reinigungsvorrichtung gereinigt.

Der Kolben 33, der Stößel 39 und der Taster 40 verbleiben an dem Antrieb 2 und werden in der Zwischenzeit dort manuell gereinigt und desinfiziert.

Nach der Reinigung wird in umgekehrter Richtung der Auswerfer 44 manuell in Richtung der Längsachse 8 derart wieder auf das Greifelement 4 gesetzt, dass die Zapfen 45 zwischen den Stegen 18 des Greifelements 4 durchdringen. Dann wird der Vakuumzylinder 3 in Richtung der Längsachse 8 derart auf das Greifelement 4 gesetzt, dass die Stifte 16 des Vakuumzylinders 3 in den Schlitzen 22 des Greifelements 4 liegen, im Uhrzeigersinn um die Längsachse 8 verschwenkt und leicht in der Richtung der Längsachse 8 gegen das Greifelement 4 gedrückt, bis der weitere Schnellverschluss 6 einrastet.

Der Vakuumzylinder 3 in Baueinheit mit Greifelement 4 und Auswerfer 44 wird gemeinsam mit den weiteren Vakuumzylindern auf der Transportpalette gesammelt, zurück zu den Schneidmaschinen und dort montiert. Hierzu wird der Vakuumzylinder 3 in Richtung der Längsachse 8 derart wieder auf den Antrieb 2 gesetzt, dass einerseits der Kolben 33 mit seiner inneren Stirnfläche 34 den inneren Saugraum 36 im Zylinder 19 des Greifelements 4 und mit seiner äußeren Stirnfläche 35 den äußeren Saugraum 38 im Vakuumzylinder 3 und der Taster 40 die Öffnung im inneren Schneidring 24 verschließt und andererseits die Stifte 32 des Antriebs 2 in den Schlitzen 14 des Vakuumzylinders 3 liegen.

Nun wird der Vakuumzylinder 3 im Uhrzeigersinn um die Längsachse 8 verschwenkt und leicht in der Richtung der Längsachse 8 gegen den Antrieb 2 gedrückt, bis auch der Schnellverschluss 5 in der Raste 7 einrastet.

Ein zweiter, nicht dargestellter erfindungsgemäßer Sauggreifer unterscheidet sich von dem erstgenannten dadurch, dass das Greifelement nicht unmittelbar an dem Vakuumzylinder angebracht ist. Stattdessen weist der zweite Sauggreifer ein Anschlusselement auf, dass - wie das Greifelement 4 an dem ersten Sauggreifer 1 - mit dem Vakuumzylinder des zweiten Sauggreifers mit einem (weiteren) Schnellverschluss verbunden ist.

An dem Anschlusselement ist ein flexibler, unterdruckfester Schlauch angebracht, der den Vakuumzylinder mit dem Greifelement des zweiten Sauggreifers verbindet. Das zweite Greifelement weist eine in einer Kontaktebene umlaufende flexible Dichtlippe auf, die sich beim Greifen eines Lebensmittels an dessen Oberflächenkontur anpasst.

In den Figuren sind
- 1: Sauggreifer
- 2: Antrieb
- 3: Vakuumzylinder
- 4: Greifelement
- 5: Schnellverschluss
- 6: weiterer Schnellverschluss
- 7: Raste
- 8: Längsachse
- 9: Gehäuse
- 10: Durchmesser
- 11: oberes Ende
- 12: Umfang
- 13: Durchbruch
- 14: Schlitz
- 15: unteres Ende
- 16: Stift
- 17: Kranz
- 18: Steg
- 19: Zylinder
- 20: Durchmesser
- 21: Durchmesser
- 22: Schlitz
- 23: äußerer Schneidring
- 24: innerer Schneidring
- 25: Gehäuse
- 26: untere Abschlusskappe
- 27: obere Abschlusskappe
- 28: Kolben
- 29: Hohlachse
- 30: Anschlusszylinder
- 31: Schlauchdurchführung
- 32: Stift
- 33: Kolben
- 34: innere Stirnfläche
- 35: äußere Stirnfläche
- 36: innerer Saugraum
- 37: Mantelfläche
- 38: äußerer Saugraum
- 39: Stößel
- 40: Taster
- 41: Schaltzunge
- 42: Ventil
- 43: Anschlusszylinder
- 44: Auswerfer
- 45: Zapfen

## Patentansprüche

1. Sauggreifer (1) für Lebensmittel mit einem Greifelement (4), einem mit dem Greifelement (4) verbundenen Vakuumzylinder (3) und einem Kolben (33), sowie mit einem an dem Vakuumzylinder (3) angebrachten Antrieb (2) für den Kolben (33) zum Verschieben des Kolbens (33) in dem Vakuumzylinder (3), wobei im Betrieb des Sauggreifers (1) ein Verschieben des Kolbens (33) in einer Axialrichtung des Vakuumzylinders (3) in dem Vakuumzylinder (3) und in dem Greifelement (4) einen Unterdruck zum Greifen des Lebensmittels aufbaut, ***gekennzeichnet durch*** einen Schnellverschluss (5), der den Vakuumzylinder (3) mit dem Antrieb (2) verbindet, wobei nach einem Lösen des Schnellverschlusses (5) der Vakuumzylinder (3) von dem Antrieb (2) manuell, also ohne Werkzeuge mit den Händen abnehmbar ist.

2. Sauggreifer (1) nach dem vorgenannten Anspruch, ***dadurch gekennzeichnet, dass*** der Schnellverschluss (5) ein Bajonettverschluss ist.

3. Sauggreifer (1) nach einem der Ansprüche 1 bis 2, ***dadurch gekennzeichnet, dass*** das Greifelement (4) fest an dem Vakuumzylinder (3) angebracht ist und einen Schneidring (23, 24) aufweist, der beim Greifen des Lebensmittels in dessen Oberfläche einschneidet und so das Greifelement (4) abdichtet.

4. Sauggreifer (1) nach dem vorgenannten Anspruch, ***gekennzeichnet durch*** einen in dem Vakuumzylinder (3) in der Axialrichtung beweglich gelagerten Auswerfer (44), der zum Auswerfen des Lebensmittels **durch** das Greifelement (4) hindurch Druck auf die Oberfläche des Lebensmittels ausübt.

5. Sauggreifer (1) nach Anspruch 2 bis 4, ***gekennzeichnet durch*** einen Taster (40), der aus dem Antrieb (2) **durch** das Greifelement (4) hindurch geführt ist und zu Beginn eines Greifvorgangs den Antrieb (2) in Betrieb setzt, wenn er mit der Oberfläche des Lebensmittels in Kontakt kommt.

6. Sauggreifer (1) nach einem der Ansprüche 2 bis 5, ***gekennzeichnet durch*** einen weiteren Schnellverschluss (6), der das Greifelement (4) mit dem Vakuumzylinder (3) verbindet, wobei nach einem Lösen des weiteren Schnellverschlusses (6) das Greifelement (4) von dem Vakuumzylinder (3) manuell abnehmbar ist.

7. Sauggreifer (1) nach einem der Ansprüche 1 bis 2, ***gekennzeichnet durch*** einen Schlauch, **durch** den der Vakuumzylinder (3) mit dem Greifelement (4) verbunden ist, wobei das Greifelement (4) ein flexibles Kontaktelement aufweist, das sich beim Greifen des Lebensmittels an dessen Oberflächenkontur anpasst und so das Greifelement (4) abdichtet.

8. Verfahren zum Reinigen eines Sauggreifers (1) für Lebensmittel, der ein Greifelement (4) aufweist, einen mit dem Greifelement (4) verbundenen Vakuumzylinder (3) und einen Kolben (33), sowie einen mit dem Vakuumzylinder (3) verbundenen Antrieb (2) für den Kolben (33) zum Verschieben des Kolben (33) in dem Vakuumzylinder (3), wobei im Betrieb des Sauggreifers (1) ein Verschieben des Kolben (33) in einer Axialrichtung des Vakuumzylinders (3) in dem Vakuumzylinder (3) und in dem Greifelement (4) einen Unterdruck zum Greifen des Lebensmittels aufbaut, ***dadurch gekennzeichnet, dass*** der Vakuumzylinder (3) durch Lösen eines Schnellverschlusses (5) von dem Antrieb (2) gelöst und manuell, also ohne Werkzeuge mit den Händen abgenommen wird, und dass der Vakuumzylinder (3) von dem Antrieb (2) getrennt gereinigt und nach dem Reinigen auf den Antrieb (2) wieder aufgesetzt und der Schnellverschluss (5) geschlossen wird.

9. Verfahren nach dem vorgenannten Anspruch, ***dadurch gekennzeichnet, dass*** der Vakuumzylinder (3) nach dem Abnehmen von dem Antrieb (2) auf einer Transporteinrichtung in der Axialrichtung im Wesentlichen senkrecht abgestellt wird.

10. Verfahren nach einem der Ansprüche 8 oder 9, ***dadurch gekennzeichnet, dass*** vor dem Reinigen von dem Vakuumzylinder (3) ein Greifelement (4) mit einem Schneidring (23, 24), ein solches Greifelement (4) und ein Auswerfer (44) oder ein Anschlusselement mit einem Schlauch, durch den der Vakuumzylinder (3) mit dem Greifelement (4) verbunden ist, manuell abgenommen wird.

11. Verfahren nach einem der Ansprüche 8 bis 10, ***dadurch gekennzeichnet, dass*** mehrere Vakuumzylinder (3) gesammelt und in einem Reinigungsvorgang gemeinsam gereinigt werden.
